# NEW EUROPEAN PATENT SPECIFICATION

(11) **EP 1 984 148 B2**
(45) Date of publication and mention of the opposition decision: **04.09.2019**
(45) Mention of the grant of the patent: 28.08.2013
(21) Application number: 06761109.5
(22) Date of filing: 12.07.2006
(51) Int. Cl.: B23P 19/06, B25B 23/147

(54) **METHOD FOR APPLYING PRESET TORQUES TO THREADED FASTENERS AND A POWER TOOL THEREFOR**
VERFAHREN ZUM ANLAGEN VON VOREINGESTELLTEN DREHMOMENTEN AN GEWINDEBEFESTIGUNGSELEMENTEN UND KRAFTBETÄTIGTES WERKZEUG DAFÜR
PROCÉDÉ POUR APPLIQUER DES VALEURS DE COUPLE PRÉDÉTERMINÉES AUX FIXATIONS FILETÉES ET OUTIL MÉCANISÉ CONÇU À CET EFFET

(30) Priority: 06.02.2006 CA 2535299
(43) Date of publication of application: 29.10.2008
(73) Proprietor: Provost, Dan, Abbotsford BC V4X 1W8 (CA)
(72) Inventor: Provost, Dan, Abbotsford BC V4X 1W8 (CA)
(74) Representative: Lecomte & Partners
(86) International application number: PCT/CA2006/001147
(87) International publication number: WO 2007/090258

(56) References cited:
- EP-A2- 0 419 435
- EP-A2- 1 454 713
- DE-A1- 10 341 975
- US-A- 5 713 250
- US-A- 5 903 462
- US-A1- 2003 196 824
- US-B1- 6 430 463
- US-B1- 6 516 896
- US-B2- 6 390 205
- US-B2- 6 804 929
- Annex "ALKItronic EF and EFC" comprising the following NPL documents & Information sheet "Alkitronic EF-Abschaltschrauber" of 18/05/02 & Broschure "Alkitronic EFCip" of 18/02/05 & Broschure "Calibra 2020" of 03/03/05 & User Manuel "Alkitronic EFCip30plus" torque device
- Baldor Motors and Drives "Mintdrive" installation manuel of June 2001

## Description

### I. BACKGROUND OF THE INVENTION

### 1. Field of the Invention

The present invention relates generally to torque control systems for power driven rotating tools and, more particularly, to a method for applying preset torques to threaded fasteners and a power tool thereof.

### 2. Description of the Prior Art

In order to install threaded fasteners, such as screws, bolts, nuts or the like, a power tool is used to apply the necessary torque. In installing a threaded fastener, it is usually required to tighten a threaded fastener until it is adequately tensioned, thereby insuring that the latter securely holds the workpiece(s). To this end, the required tension in threaded fasteners is determined previously by engineering calculus, as to ensure that a certain attachment is firmly secured by one or more of those fasteners. The tension achieved in a threaded fastener is depending directly upon the applied torque. Therefore, it is necessary to tighten a fastener until a targeted, preset torque has been achieved. Ending the tightening of a threaded fastener, without applying enough torque, may result in a nonsecure attachment, which can sometimes lead to unexpected, grave consequences, especially in aircrafts, automobiles, bridges, pressure vessels, etc. On the other hand, applying an excessive torque during the tightening of a threaded fastener may damage the latter and/or the workpiece(s).

Attempts have been made in the past to develop power tools with preset torques. Several United States patents have addressed this issue. For example, United States Patent No. 6,390,205, dated May 21, 2002 and granted to Wallgren et al. for a "POWER TOOL SYSTEM WITH PROGRAMMABLE CONTROL UNIT". This patent describes a portable power tool combined with an operational control unit. The latter includes an integrated memory for storing power tool operational data and an auxiliary memory module normally containing the same power tool operational data as the integrated memory. The operation control unit comprises a communication device for transmitting power tool operation data between the integrated memory and the auxiliary memory module, There are two disadvantages to this power tool. First, voltage reference used to preset torques is susceptible to voltage surges, which have a direct impact on the reliability and precision of the power tool. Second, the memory is used only for the storing of operational data and not for the storing of operational and measurement data.

Another example is United States Patent No. 6.430.463, dated Aug. 6, 2002 and granted to Lysaght for a "TORQUE CONTROL". This torque control is a system that controls and monitors the power delivered to a tool. By monitoring the amount of power being delivered to the tool, a control is able to calculate the amount of torque the tool is generating. This torque system includes a controller, microprocessor, variable frequency drive (VPD) and a power tool. The VPD is programmed to provided a specific voltage at any given frequency and to provide a feedback, to a control board in the form a voltage that represents the amount of current that is provided to the tool. Lysaght's torque control has a basic disadvantage. The VPD provides several calibration curves. The applicant directly measures the motor current, which is simper and more precise, while Lysaght infers the torque from currents at different frequencies.

### II. SUMMARY OF THE INVENTION

There is accordingly a need for an improved power tool that surmounts the present disadvantages.

Thus, it is an objective of the present invention to devise a reliable tool which is precise and provides reproducible results.

It is another objective of the present invention to construct a well engineered power tool that provides an extensive service life, is more convenient and ensures safe servicing.

Based on the foregoing objectives, the inventors developed a power tool for applying preset torques to threaded fasteners, according to claim 1.

Further a method for applying preset torques to threaded fasteners according to claim 3, adapted to be carried out by the foregoing described power tool.

### BRIEF DESCRIPTION OF THE DRAWINGS

The subject matter of the invention is particularly pointed out and distinctively claimed in the concluding portion of the specification. The invention, however, both in structure and operation may be better understood by reference to the following description taken in conjunction with the subjoined claims and the accompanying drawings of which:
Figure 1 shows a bloc diagram of the power tool according to the present invention; and
Figure 2 shows a connecting diagram of the power tool of Figure 1.

### IV. DESCRIPTION OF A PREFFERED EMBODIMENT

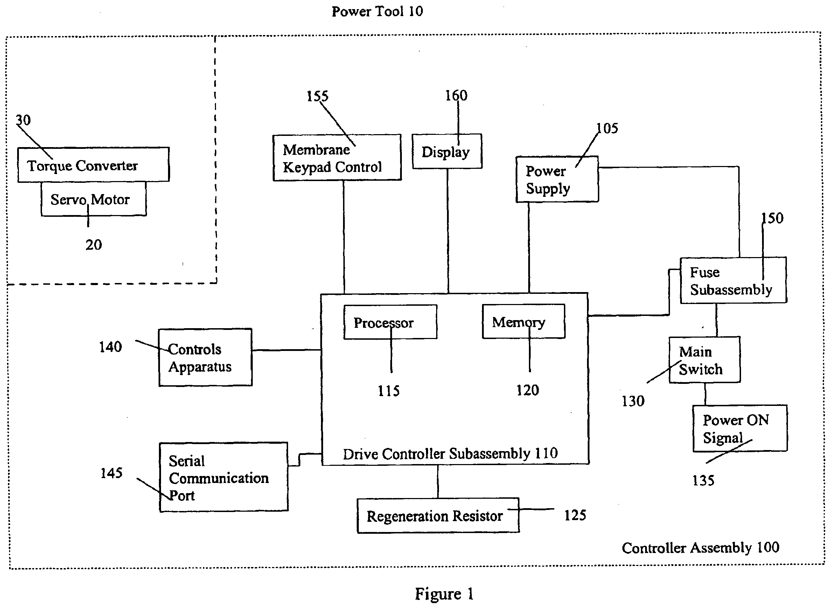

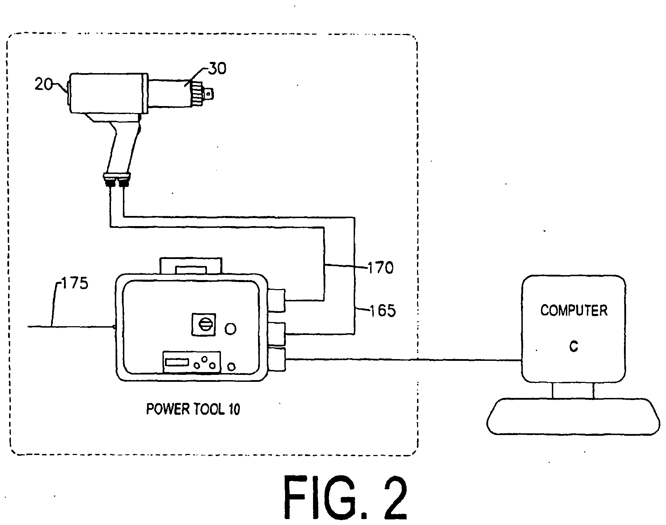

FIGS. 1 and 2 illustrate a preferred embodiment of a power tool, generally designated by the numeral 10. Power tool 10 is an electrically powered pistol type power wrench. Basically, power tool 10 incorporates three main components:
- a servomotor 20;
- a torque converter 30 driven by servomotor 20 with which it forms a unit; and
- a controller assembly 100.

Describing now in detail, controller assembly 100 includes
- a power supply subassembly 105 for converting an Alternate Current (115V AC) from a mains power (not shown) to 5 and 24V DC (the use of former and latter will be disclosed further in the disclosure);
- a drive controller subassembly 110 for, firstly, converting the Alternate Current (115V AC) received from the mains power, from one phase to three phase and, secondly, for delivering the latter to servomotor 20;

Power supply subassembly 105, used in the present embodiment, is of the type known to those skilled in the art and is readily available on the market. Namely, a power supply subassembly 105, as one sold by LAMBDA Electronics Inc., under the name SCT 46, is used. This power supply subassembly 105 is adaptable to convert an input of 85-265V, 1.8A, 47-63 Hz to 12VDC, 5V DC and 24V DC, but only the former and the latter are used in the present embodiment.

Drive controller subassembly 110 is also of conventional type. A drive controller subassembly 110, such as one made by BALDOR under the name MINTDRIVE" MDHIA07TR-RN23, is used. In this preferred embodiment, drive controller subassembly 110 is supplied with 24V DC by power supply subassembly 105 and 115V AC from the mains power and serves to convert 115V AC one phase current to 115V AC three phase current used by servomotor 20.

Drive controller subassembly 110 incorporates
- a processor 115 with a memory 120 used for
   a) loading preset torques values for torque converter 30, driven by servomotor 20, and for
   b) feedbacks from attained torques, detected as load currents, developed during working processes.

Alternatively, there is another program that can substitute or be added to the foregoing programming. This program uses analog DC voltage feedback, which allows measuring a preset torque via an elongation of a fastening element /bolt-screw/ or via other parameters of feedbacks that use analog DC voltage.

Controller assembly 100 further includes the followings:
- a regeneration resistor 125 used to dissipate excess power from an internal DC bus of drive controller subassembly 110 during a deceleration of servomotor 20;
- a main switch 130 for connecting/disconnecting an external source of power (not shown) of 110-240V to or from drive controller subassembly 110;
- a power ON signal 135 displayed on a light connected to main switch 130;
- a controls apparatus 140 for detecting signals and data to and from servomotor 20 /torque converter 30 unit, and from drive controller subassembly 110; the detected signals including, without being limited to, direction of rotation, on-off of power tool 10, ready, passed/reached a preset torque, or fail to reach the latter;
- a serial communication port 145 of the RS 232/485 type, used to connect controller assembly 100 to an external computer C for uploading and downloading data and software/firmware, namely to program, calibrate and retrieve stored data incorporated in memory 120;
- a fuse subassembly 150 for overcurrent protection;
- a membrane keypad control 155 using a system of buttons for setting and changing measurement units shown on a
- display 160, which receives 5 V from power supply subassembly 105, showing
   a) a preset torque;
   b) a measured-achieved in real-time torque; and
   c) an elongation of a fastening element, to which the measured-achieved in real-time torque is applied;
- first and second multi-core cables, respectively 165 and 170, first multi-core cable 165 supplying three phase AC power to servomotor 20, second multi-core cable conveying control signals and data between servomotor 20/torque converter 30 unit and control assembly 100; and
- a cable 175 for connecting control assembly 100 to mains power (not shown).

The basic concept of power tool 10 resides in the following:

Once power tool 10 is actuated by an operator, a HIGH logic level is set at a digital input port (not shown) of drive controller subassembly 110. The latter detects the HIGH logic level and servomotor 20 is enabled due to a software, programmed to take in consideration the following situations and, consequently, to direct appropriate actions:
a) an internal circuitry (not shown) in drive controller subassembly 110 continuously measures a current supplied to servomotor 20;
b) the current supplied to servomotor 20 increases gradually until power tool converter 30 reaches a preset torque; the latter is programmed to correspond to a specific current that is continuously detected and compared to the current supplied to servomotor 20;
c) when the current supplied to servomotor 20 equals the current corresponding to a preset torque, the software is so programmed as to direct the following operations:
   1. changing a first digital output level to HIGH on a specified output and signalizing that the preset torque is reached;
   2. temporarily stopping servomotor 20 by setting a second digital output level to LOW; and then
   3. reversing the rotation direction of servomotor 20, as to obtain a limited counter clock movement, intended to ease a release of power tool 30 from a fastener (not shown).

Power tool 10 should be calibrated to provide preset torques (targeted moments of rotation). To this end, the following operations are performed:
- continuously detecting the currents supplied to servomotor 20 up to values corresponding to preset torques, which are established by the user in order to execute prevented to exceed a preset torques; in some instances, if a rotation of servomotor 20 ends before a preset torque is attained, there is failure, which is instantly signalized to the operator of power tool 10; the data resulted from this operation are represented graphically or in a table form and entered into an external computer C; and required tightenings, when, by appropriately stopping servomotor 20, the latter is
- from said external computer C the foregoing data are transferred, by a calibration software, to memory 120.

A calibrator is used for applying, measuring and programming in a software one or more preset torques and, correspondingly, the currents required for attaining the latter.

As required, a detailed embodiment of the present invention is disclosed herein; however, it is to be understood that the disclosed embodiment is merely exemplary of the invention which may be embodied in various forms. Therefore, specific structural and functional details disclosed herein are not to be interpreted as limiting.

## Claims

1. A power tool (10) for applying preset torques to threaded fasteners, comprising in combination,
- a servomotor (20);
- a torque converter (30) driven by said servomotor (20) with which it forms a unit; and
- means for controlling (100) forming an assembly which basically includes,
- a power supply subassembly (105) for converting an AC received from a mains power to low voltage DC;
- means for drive controlling (110), which forms a subassembly,
said means for drive controlling (110) being used, firstly, for converting said AC received from said mains power, from one phase to three and, secondly, for delivering the latter to said servomotor (20);
- a controls apparatus (140) for detecting signals and data to and from said servomotor (20) / said torque converter (30) and said means for drive controlling (110); and
- a serial communication port (145) used to connect means for controlling (100) to a computer (C), for uploading and downloading data and software/firmware, namely for programming, calibrating and retrieving stored data incorporated in a memory (120);
said means for drive controlling (110) incorporating
- a processor (115) having said memory (120) for
a) loading preset torques values for said torque converter (30), driven by said servomotor (20), and for
b) feedbacks from attained torques, detected as load currents developed during working processes.

2. The power tool for applying preset torques to threaded fasteners, as defined in claim 1, wherein said means for controlling (100) further comprises
- a regeneration resistor (125) used to dissipate excess power from an internal DC bus of said means for drive controlling (110) during a deceleration of said servomotor (20);
- a main switch (130) for connecting/disconnecting said means power to or from said means for drive controlling (110);
- a power ON signal (135) displayed on a light connected to said main switch (130);
- a fuse subassembly (150) for overcurrent protection;
- a membrane keypad control (155) using a system of buttons for setting and changing measurement units shown on
- a display (160), connected to said power supply subassembly, showing
a) a preset torque;
b) a measured-achieved in real-time torque; and an elongation of a fastening element, to which the measured-achieved in real- time torque is applied;
- first and second multi-core cables (165) and (170), said first multi-core cable (165) supplying three phase AC power to said servomotor (20), while said second multi-core cable (170) conveying control signals and data between said servomotor (20) / said torque converter (30) and said means for controlling (100); and
- a cable (175) for connecting means for controlling (100) to said mains power.

3. Method for applying preset torques to threaded fasteners, adapted to be carried out by a power tool (10) comprising
- a servomotor (20);
- a torque converter (30) driven by said servomotor (20) with which it forms a unit; and
- means for controlling (100) forming an assembly which basically includes,
- a power supply subassembly (105) for converting an AC received from a mains power to low voltage DC;
- means for drive controlling (110), which forms a subassembly,
said means for drive controlling (110) being used, firstly, for converting said AC received from said mains power, from one phase to three and, secondly, for delivering the latter to said servomotor (20);
- a controls apparatus (140) for detecting signals and data to and from said servomotor (20) / said torque converter (30), said servomotor (20) and said torque converter (30) constituting a unit, and from means for drive controlling (110); and
- a serial communication (145) port used to connect means for controlling (100) to a computer (C), for uploading and downloading data and software/firmware, namely for programming, calibrating and retrieving stored data incorporated in a memory (120);
said means for drive controlling (110) incorporating
- a processor (115) having said memory (120) for
a) loading preset torques values for said torque converter (30), driven by said servomotor (20), and for
b) feedbacks from attained torques, detected as load currents developed during working processes;
said method for applying preset torques to threaded fasteners including
- actuating said power tool (10) by an operator to set a HIGH logical level at a digital input port of said means for drive controlling (110);
- detecting said HIGH logic level by said means for drive controlling (110) so that said servomotor (20) is, enabled due to a software, programmed to take in consideration the following situations and, consequently, to direct appropriate actions:
- continuously measuring a current supplied to said servomotor (20) by said means for drive controlling (110);
- increasing gradually the current supplied to said servomotor (20) until said torque converter (30) reaches a preset torque, the latter being programmed to correspond to a specific current that is continuously detected and compared to the current supplied to said servomotor (20);
- using the programmed software, when the current supplied to said servomotor (20) equals the current corresponding to a preset torque, to direct the following operations:
- changing a first digital output level to HIGH on a specified output and signalizing that the preset torque is reached;
- temporarily stopping said servomotor (20) by setting a second digital output level to LOW; and then
- reversing the rotation direction of said servomotor (20) so, as to obtain a limited counter clock movement, intended to ease a release of said power tool (10) from one of said threaded fasteners.

4. The method as defined in claim 3, further comprising
- performing a calibration of said power tool (10) for establishing preset torques (targeted moments of rotation), said calibration comprising
- continuously detecting the currents supplied to said servomotor (20) up to values corresponding to said preset torques, which are established by the user in order to execute required tightenings, when, by appropriately stopping said servomotor (20), the latter is prevented to exceed a preset torque, and in some instances, if a rotation of said servomotor (20) ends before a preset torque is attained, there is failure, which is instantly signalized to the operator of said power tool (10); the data resulted from this operation being represented graphically or in a table form and then entered into an external computer C; and
- transferring said data from said external computer C to said memory (120) by using a calibration software.

## Patentansprüche

1. Elektrowerkzeug (10) zum Aufbringen voreingestellter Drehmomente auf Gewindebefestigungselemente, umfassend in Kombination
- einen Servomotor (20);
- einen von dem Servomotor (20) angetriebenen Drehmomentwandler (30), mit dem er eine Einheit bildet; und
- Steuereinrichtungen (100), die eine Anordnung bilden, die im Wesentlichen umfassen,
- eine Stromversorgungsbaugruppe (105) zum Umwandeln eines Wechselstroms, der von einem Netzstrom empfangen wird, in eine Niedergleichspannung;
- Mittel zur Antriebssteuerung (110), die eine Baugruppe bilden,
wobei die Mittel zur Antriebssteuerung (110) verwendet werden, um erstens den von der Netzspannung empfangenen Wechselstrom von einer Phase in drei Phasen umzuwandeln und zweitens den letzteren an den Servomotor (20) zu liefern;
- eine Steuervorrichtung (140) zum Erfassen von Signalen und Daten zu und von dem Servomotor (20) / dem Drehmomentwandler (30) und den Mitteln zur Antriebssteuerung (110); und
- eine serielle Kommunikationsschnittstelle (145), die verwendet wird, um den Steuereinrichtungen (100) an einen Computer (C) anzuschließen, um Daten und Software / Firmware hoch- und herunterzuladen, nämlich zum Programmieren, Kalibrieren und Abrufen gespeicherter Daten, die in einem Speicher (120) enthalten sind;
wobei die Mittel zur Antriebssteuerung (110) einen den Speicher (120) umfassenden Prozessor (115) enthalten, zum
a) Laden voreingestellter Drehmomentwerte für den vom Servomotor (20) angetriebenen Drehmomentwandler (30) und zum
b) Rückmeldungen von erreichten Drehmomenten, die als Lastströme während der Arbeitsprozesse erfasst werden.

2. Elektrowerkzeug zum Aufbringen voreingestellter Drehmomente auf Befestigungselemente mit Gewinde nach Anspruch 1, wobei die Steuereinrichtungen (100) ferner umfassen
- einen Regenerationswiderstand (125), der verwendet wird, um überschüssige Leistung von einem internen Gleichstrombus der Mittel zur Antriebssteuerung (110) während einer Verzögerung des Servomotors (20) abzuleiten;
- einen Hauptschalter (130) zum Verbinden / Trennen der Mittelleistung zu oder von den Mitteln zur Antriebssteuerung (110);
- ein Einschalt-Signal (135), das an einer mit dem Hauptschalter (130) verbundenen Leuchte angezeigt wird;
- eine Sicherungsbaugruppe (150) zum Überstromschutz;
- eine Folientastatursteuerung (155) unter Verwendung eines Tastensystems zum Einstellen und Ändern der Maßeinheiten, die auf
- eine Anzeige (160) gezeigt sind, wobei die Anzeige (160) mit der Stromversorgungsbaugruppe verbunden ist und zeigt
a) ein voreingestelltes Drehmoment;
b) ein in Echtzeit erreichtes Drehmoment; und eine Dehnung eines Befestigungselements, auf das das in Echtzeit gemessene Drehmoment aufgebracht wird;
- erste und zweite mehradrige Kabel (165) und (170), wobei das erste mehradrige Kabel (165) dem Servomotor (20) eine Dreiphasenwechselstromversorgung zuführt, während das zweite mehradrige Kabel (170) Steuersignale und Daten zwischen dem Servomotor (20) / dem Drehmomentwandler (30) und der Steuereinrichtungen (100) überträgt; und
- ein Kabel (175) zum Verbinden der Steuereinrichtungen (100) mit der Netzspannung.

3. Verfahren zum Aufbringen voreingestellter Drehmomente auf Gewindebefestigungselemente, das dazu eingerichtet ist, von einem Elektrowerkzeug (10) ausgeführt zu werden, das in Kombination umfasst:
- einen Servomotor (20);
- einen von dem Servomotor (20) angetriebenen Drehmomentwandler (30), mit dem er eine Einheit bildet; und
- Steuereinrichtungen (100), die eine Anordnung bilden, die im Wesentlichen umfassen,
- eine Stromversorgungsbaugruppe (105) zum Umwandeln eines Wechselstroms, der von einem Netzstrom empfangen wird, in eine Niedergleichspannung;
- Mittel zur Antriebssteuerung (110), die eine Baugruppe bilden,
wobei die Mittel zur Antriebssteuerung (110) verwendet werden, um erstens den von der Netzspannung empfangenen Wechselstrom von einer Phase in drei Phasen umzuwandeln und zweitens den letzteren an den Servomotor (20) zu liefern;
- eine Steuervorrichtung (140) zum Erfassen von Signalen und Daten zu und von dem Servomotor (20) / dem Drehmomentwandler (30) und den Mitteln zur Antriebssteuerung (110); und
- eine serielle Kommunikationsschnittstelle (145), die verwendet wird, um den Steuereinrichtungen (100) an einen Computer (C) anzuschließen, um Daten und Software / Firmware hoch- und herunterzuladen, nämlich zum Programmieren, Kalibrieren und Abrufen gespeicherter Daten, die in einem Speicher (120) enthalten sind;
wobei die Mittel zur Antriebssteuerung (110) einen den Speicher (120) umfassenden Prozessor (115) enthalten, zum
a) Laden voreingestellter Drehmomentwerte für den vom Servomotor (20) angetriebenen Drehmomentwandler (30) und zum
b) Rückmeldungen von erreichten Drehmomenten, die als Lastströme während der Arbeitsprozesse erfasst werden,
wobei das Verfahren zum Aufbringen voreingestellter Drehmomente auf Befestigungselemente mit Gewinde umfasst
- Betätigen des Elektrowerkzeugs (10) durch eine Bedienungsperson, um einen hohen logischen Pegel an einem digitalen Eingangsport der Mittel zur Antriebssteuerung (110) einzustellen;
- Erfassen des hohen Logikpegels durch die Mittel zur Antriebssteuerung (110), so dass der Servomotor (20) aufgrund einer Software programmiert wird, um die folgenden Situationen zu berücksichtigen und folglich geeignete Aktionen zu leiten:
- kontinuierliches Messen eines Stroms, der dem Servomotor (20) von den Mitteln zur Antriebssteuerung (110) zugeführt wird;
- allmähliches Erhöhen des dem Servomotor (20) zugeführten Stroms, bis der Drehmomentwandler (30) ein voreingestelltes Drehmoment erreicht, wobei letzteres so programmiert ist, dass es einem bestimmten Strom entspricht, der kontinuierlich erfasst und mit dem dem Servomotor (20) zugeführten Strom verglichen wird;
- Verwenden der programmierten Software, um, wenn der dem Servomotor (20) zugeführte Strom dem Strom entspricht, der einem voreingestellten Drehmoment entspricht, die folgenden Vorgänge zu steuern:
- Ändern eines ersten digitalen Ausgangspegels auf HIGH an einem bestimmten Ausgang und Signalisieren, dass das voreingestellte Drehmoment erreicht ist;
- vorübergehendes Stoppen des Servomotors (20) durch Einstellen eines zweiten digitalen Ausgangspegels auf LOW; und dann
- Umkehren der Drehrichtung des Servomotors (20), um eine kleine Gegenuhrbewegung zu erhalten, die das Lösen des Elektrowerkzeugs (10) von einem der Gewindebefestigungselemente erleichtern soll.

4. Verfahren nach Anspruch 3, ferner umfassend
- Durchführen einer Kalibrierung des Elektrowerkzeugs (10) zum Festlegen von voreingestellten Drehmomenten (gezielten Drehmomenten), wobei die Kalibrierung umfasst:
- kontinuierliches Erfassen der dem Servomotor (20) zugeführten Ströme bis zu Werten, die den voreingestellten Drehmomenten entsprechen, die vom Benutzer festgelegt werden, um die erforderlichen Anziehvorgänge auszuführen, wenn dieser durch geeignetes Anhalten des Servomotors (20) daran gehindert wird ein voreingestelltes Drehmoment überschreiten und in einigen Fällen, wenn eine Drehung des Servomotors (20) endet, bevor ein voreingestelltes Drehmoment erreicht ist, ein Fehler vorliegt, der dem Bediener des Elektrowerkzeugs (10) sofort angezeigt wird; die aus dieser Operation resultierenden Daten werden grafisch oder in Tabellenform dargestellt und dann in einen externen Computer C eingegeben. und
- Übertragen der Daten von dem externen Computer C zu dem Speicher unter Verwendung einer Kalibrierungssoftware.

## Revendications

1. Un outil de puissance (10) pour appliquer des couples prédéfinis à des éléments de fixation filetés, comprenant en combinaison,
- un servomoteur (20) ;
- un convertisseur de couple (30) entraîné par ledit servomoteur (20) avec lequel il forme une unité, et
- des moyens de contrôle (100) formant un ensemble qui comporte essentiellement,
- un sous-ensemble d'alimentation électrique (105) pour convertir un courant alternatif AC reçu d'une source de courant principale à basse tension ;
- des moyens de contrôle d'entraînement (110), qui forment un sous-ensemble,
lesdits moyens de contrôle d'entraînement (110) étant utilisés, d'une part, pour convertir ledit courant alternatif AC provenant de ladite source de courant principale, d'une phase à trois phases et, d'autre part, pour fournir lesdites trois phases à ledit servomoteur (20);
- un dispositif de contrôle (140) pour détecter des signaux et des données vers et à partir dudit servomoteur (20) / vers et à partir dudit convertisseur de couple (30) et vers et à partir desdits moyens de contrôle d'entraînement (110), et
- un port de communication en série (145) utilisé pour connecter les moyens de contrôle (100) à un ordinateur (C), pour uploader et télécharger des données et un logiciel / firmware, en particulier pour la programmation, le calibrage et la récupération des données stockées dans une mémoire (120); lesdits moyens de contrôle d'entraînement (110) incorporant
- processeur (115) ayant ladite mémoire (120) pour
a) le chargement des valeurs des couples prédéfinis pour ledit convertisseur de couple (30) entraîné par ledit servomoteur (20), et pour
b) des évaluations des couples atteints, détectés comme des courants de charge développés pendant le processus de travail.

2. L'outil de puissance pour appliquer des couples prédéfinis à des éléments de fixation filetés tel que défini dans la revendication 1, dans lequel lesdits moyens de contrôle (100) comprennent en outre
- une résistance de régénération (125) servant à dissiper la puissance en excès d'un bus interne DC desdits moyens de contrôle d'entraînement (110) lors d'une décélération de dudit servomoteur (20);
- un commutateur principal (130) pour connecter / déconnecter ledit moyen d'alimentation vers ou depuis lesdits moyen de contrôle d'entraînement (110);
- un signal de puissance ON (135) qui s'affiche sur une lumière connectée à l'interrupteur principal (130);
- un sous-ensemble de fusible (150) pour la protection contre les surintensités ;
- une membrane de contrôle du clavier (155) qui utilise un système des boutons de réglage et des unités pour mesurer la modification localisée sur
- un dispositif d'affichage (160), raccordé au sous-ensemble de source d'alimentation, montrant
a) un couple de rotation prédéfini ;
b) un couple obtenu en temps réel, et un allongement d'un élément de fixation fileté, auquel est appliqué le couple en temps réel mesuré-réalisé ;
- un premier et un deuxième câbles multi-coeurs (165) et (170), le premier câble multi-coeur (165) fournissant de l'énergie en courant alternatif triphasé audit servomoteur (20), tandis que le second câble multi-coeurs (170) transporte des signaux de commande et des données entre ledit servomoteur (20) / ledit convertisseur de couple (30) et lesdits moyens de contrôle (100), et
- un câble (175) pour connecter les moyens de contrôle (100) à ladite alimentation principale.

3. Procédé pour appliquer des couples prédéfinis à des éléments de fixation filetés, adapté pour être réalisé par un outil de puissance (10), comprenant en combinaison,
- un servomoteur (20) ;
- un convertisseur de couple (30) entraîné par ledit servomoteur (20) avec lequel il forme une unité, et
- des moyens de contrôle (100) formant un ensemble qui comporte essentiellement,
- un sous-ensemble d'alimentation électrique (105) pour convertir un courant alternatif AC reçu d'une source de courant principale à basse tension ;
- des moyens de contrôle d'entraînement (110), qui forment un sous-ensemble,
lesdits moyens de contrôle d'entraînement (110) étant utilisés, d'une part, pour convertir ledit courant alternatif AC provenant de ladite source de courant principale, d'une phase à trois phases et, d'autre part, pour fournir lesdites trois phases à ledit servomoteur (20);
- un dispositif de contrôle (140) pour détecter des signaux et des données vers et à partir dudit servomoteur (20) / vers et à partir dudit convertisseur de couple (30) et vers et à partir desdits moyens de contrôle d'entraînement (110), et
- un port de communication en série (145) utilisé pour connecter les moyens de contrôle (100) à un ordinateur (C), pour uploader et télécharger des données et un logiciel / firmware, en particulier pour la programmation, le calibrage et la récupération des données stockées dans une mémoire (120); lesdits moyens de contrôle d'entraînement (110) incorporant
- processeur (115) ayant ladite mémoire (120) pour
a) le chargement des valeurs des couples prédéfinis pour ledit convertisseur de couple (30) entraîné par ledit servomoteur (20), et pour
b) des évaluations des couples atteints, détectés comme des courants de charge développés pendant le processus de travail ;
ledit procédé pour appliquer des couples prédéfinis à des éléments de fixation filetés comprenant :
- l'actionnement dudit outil de puissance (10) par un opérateur pour régler un niveau logique HAUT, dans un port de sortie numérique des desdits moyens de contrôle d'entraînement (110);
- la détection dudit niveau logique HAUT par lesdits moyens de contrôle d'entraînement (110) de telle sorte que ledit servomoteur (20) est, grâce à un logiciel, programmé pour prendre en considération les situations suivantes et, par conséquence, pour prendre les actions appropriées :
- la mesure continue d'un courant fourni audit servomoteur (20) au moyen desdits moyens de contrôle entraînement (110);
- l'augmentation progressive du courant fourni audit servomoteur (20) jusqu'à ce que ledit convertisseur du couple (30) atteigne un couple prédéterminé, ce dernier étant programmé pour correspondre à un courant spécifique qui est détecté en continu et comparé au courant fourni audit servomoteur (20) ;
- l'utilisation du logiciel, lorsque le courant fourni audit servomoteur (20) est égal au courant correspondant à un couple prédéterminé, pour diriger les opérations suivantes :
- la modification d'un premier niveau numérique de sortie à HAUT sur une sortie spécifiée et la signalisation que le couple prédéfini est atteint ;
- l'arrêt temporaire dudit servomoteur (20) en définissant un second niveau de sortie numérique à BAS, et ensuite
- l'inversion du sens de rotation dudit servomoteur (20) de manière à obtenir un petit mouvement en sens inverse destiné à faciliter une libération dudit outil de puissance (10) de l'un desdits éléments de fixation filetés.

4. Procédé tel que défini dans la revendication 3, comprenant en outre
- la réalisation d'un étalonnage de l'outil de puissance (10) pour établir les couples préréglés (des moments de rotation ciblés), ledit calibrage comprenant
- la détection en continu des courants fournis audit servomoteur (20) jusqu'à des valeurs correspondant auxdits couples prédéfinis, qui sont établis par l'utilisateur afin d'exécuter le serrage nécessaire, lorsque, en arrêtant de manière appropriée ledit servomoteur (20), ce dernier est empêché de dépasser un couple prédéfini, et, dans certains cas, si une rotation du servomoteur (20) se termine avant qu'un couple prédéfini est atteint, il y a un échec, ce qui est instantanément signalé à l'opérateur de l'outil de puissance (10), les données issues de cette opération ayant une représentation graphique ou sous forme de table et étant ensuite entrées dans un ordinateur externe C, et
- le transfert desdites données provenant dudit ordinateur C externe à ladite mémoire (120) en utilisant un logiciel d'étalonnage.
